# EUROPÄISCHE PATENTSCHRIFT

(11) **EP 0 602 313 B1**
(45) Veröffentlichungstag und Bekanntmachung des Hinweises auf die Patenterteilung: **03.01.1996**
(21) Anmeldenummer: 93111338.5
(22) Anmeldetag: 15.07.1993
(51) Int. Cl.: E04F 13/08, F16B 43/00, E04D 3/36

(54) **Befestigungselement**
Fastening element
Elément de fixation

(30) Priorität: 05.08.1992 DE 9210450 U
(43) Veröffentlichungstag der Anmeldung: 22.06.1994
(73) Patentinhaber: ITW BEFESTIGUNGSSYSTEME GmbH, D-58642 Iserlohn (DE)
(72) Erfinder: Rosenkranz, Hans-Jürgen, D-47877 Willich (DE); Borchardt, Klaus, Essen (DE)
(74) Vertreter: Dipl.-Ing. H. Hauck Dipl.-Ing. E. Graalfs Dipl.-Ing. W. Wehnert Dr.-Ing. W. Döring

(56) Entgegenhaltungen:
- EP-A- 0 420 799
- BE-A- 519 586

## Beschreibung

Die Erfindung betrifft ein Befestigungselement zum Befestigen von Isolationsmaterialien an Bauteilen wie Decken oder Wänden, mit einem großflächigen Kopf und einem von diesem abragenden Hohlschaft, worin an einem deformierbaren Träger ein Widerlager für einen Nagel angeordnet ist.

Zum Befestigen von Isolationsplatten aus einem Material mit geringer Druckfestigkeit an Bauteilen ist aus der EP 0 420 799 A2 ein Befestigungselement bekannt, das einen Kopf und einen Hohlschaft aufweist und mittels eines Nagels am Bauteil festgelegt wird. Zur Abstützung des Befestigungselementes am Nagelkopf ist ein Widerlager vorgesehen, wobei zwischen Widerlager und Hohlschaft eine Knautschzone angeordnet ist. Diese Knautschzone absorbiert Überenergie beim Eintreiben des Nagels, so daß beim Befestigungsvorgang schädliche Druckkräfte von den Isolationsplatten ferngehalten werden. Dies ermöglicht das Eintreiben des Nagels mittels pulverkraftbetriebener Setzgeräte, wenn die Bauteile ungleichmäßige Festigkeit aufweisen und dem Nagel unterschiedliche Eintreibwiderstände entgegensetzen. Die Knautschzone als freistehende Hülse ausgebildet, bei der die freistehende Länge der Hülse etwa dem 2- bis 5-fachen des Bohrungsdurchmessers entspricht. Um einen großen Bereich an Überschußenergien abdecken zu können, ist eine lange Hülse und damit eine große Gesamtlänge des Befestigungselementes erforderlich. Ein großer Bereich an Überschußenergien ist jedoch wünschenswert, wenn eine Befestigung an Bauteilen heterogener Zusammensetzung bzw. verschiedener Beschaffenheit sichergestellt werden soll.

Der Erfindung liegt die Aufgabe zugrunde, ein Befestigungselement zum Befestigen von Isolationsmaterialien an Bauteilen zu schaffen, das unter Beibehaltung der Befestigungshöhe des Kopfes einen großen Bereich absorbierbarer Überenergie abdeckt und eine kompakte Bauweise hat.

Erfindungsgemäß wird die Aufgabe beim Befestigungselement der eingangs genannten Art dadurch gelöst, daß der Träger unter mantelseitiger Anlage in eine Aufnahme des Hohlschaftes preßbar ist, und sich Aufnahme und/oder Träger in Eintreibrichtung des Nagels verjüngen. Vorteilhafte Ausgestaltungen sind in den Unteransprüchen angegeben.

Wird ein Nagel beispielsweise mittels eines pulverkraftbetriebenen Setzgerätes eingetrieben, so läuft sein Kopf bei ausreichender Eintreibtiefe am Widerlager auf. Dann nimmt der von Überenergie weitergeförderte Nagel den deformierbaren Träger mit, wobei er mit dem Widerlager in Kontakt bleibt. Dabei kommt der Träger mantelseitig mit einer Aufnahme des Hohlschafts in Beührung, wobei das Material des Trägers in die Aufnahme gepreßt wird. Die Überschußenergie wird in Verformungsarbeit umgesetzt und der Nagel kommt zum Stillstand, wenn die gesamte Eintreibenergie aufgebraucht ist. Der Kopf des Befestigungselementes ist nicht in das Isolationsmaterial eingedrungen.

Da die Überschußenergie des eingetriebenen Nagels durch Verformen des Trägermaterials absorbiert wird, bestimmen das Material sowie die Geometrie des Trägers und seiner Aufnahme den Ablauf des Verformungsprozesses. Je nach Einsatzzweck und je nach dem gewünschten Bereich der absorbierbaren Überenergie sind unterschiedliche geometrische Formen für den Träger und für die Aufnahme zweckmäßig. Die Parameter lassen sich so festlegen, daß bei kompakter Bauweise ein großer Bereich Überschußenergie abgedeckt wird.

Eine bevorzugte geometrische Form sowohl für den Träger als auch für die Aufnahme ist ein Konus, der die Verformung des Trägers günstig beeinflußt und einfach herstellbar ist.

Träger und Hohlschaft können aus mehreren Teilen gebildet sein, was herstellungstechnische Vorteile hat. Sie können aber auch einstückig durch Brücken miteinander verbunden sein, die beim Auftreffen des Nagels zerstört werden.

Die Erfindung wird im folgenden anhand von Zeichnungen, die Ausführungsbeispiele wiedergeben, näher erläutert. Es zeigen:
Fig. 1 ein an einem Bauteil positioniertes Befestigungselement mit Nagel im Längsschnitt;
Fig. 2 das Befestigungselement nach Fig. 1 mit eingetriebenem Nagel;
Fig. 3 ein anderes Befestigungselement mit eingetriebenem Nagel im Längsschnitt;
Fig. 4 ein anderes Befestigungselement beim Eintreiben eines Nagels im Längsschnitt;

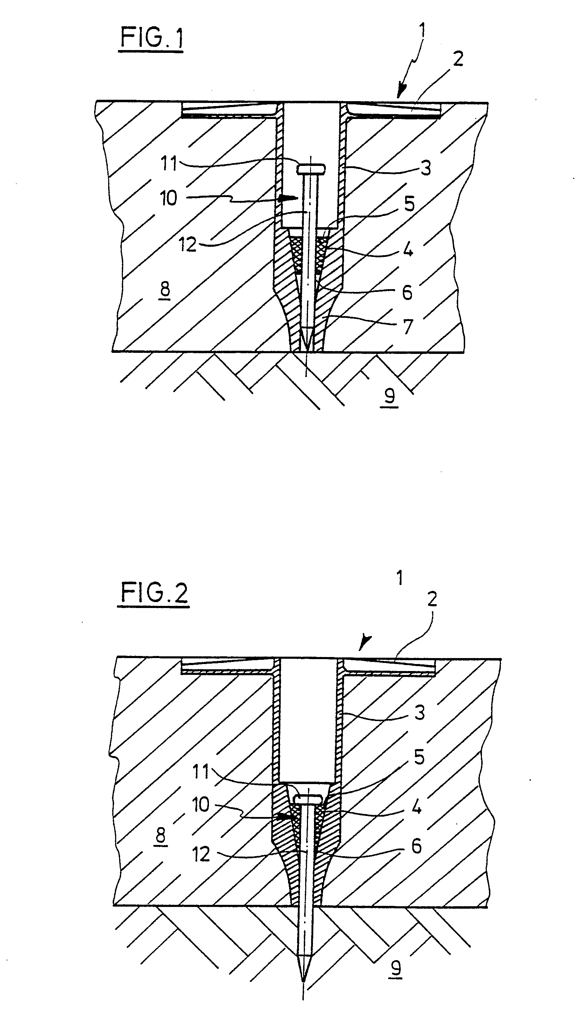

Das in den Figuren 1 und 2 dargestellte Befestigungselement 1 weist einen großflächigen Kopf 2 auf, von dem ein Hohlschaft 3 abragt. In dem Hohlschaft 3 ist ein konischer Träger 4 mit einem stirnseitigen Widerlager 5 angeordnet, der in eine konische Aufnahme 6 am Boden des Hohlschafts 3 eingesetzt ist, in die der Träger 4 hineingepreßt werden kann. Die konische Aufnahme 6 verjüngt sich in Richtung vom Kopf 2 weg. Der Hohlschaft 3 ist außen zum Fußbereich 7 hin verjüngt ausgebildet.

Das Befestigungselement 1 dient dem Befestigen von Isolationsmaterial 8 an einem Bauteil 9. Dazu wird das Befestigungselement 1 mit dem Hohlschaft 3 durch das Isolationsmaterial 8 hindurchgestoßen. Der Kopf 2 des Befestigungselementes liegt derart am Isolationsmaterial 8 an, daß sich der Fuß 7 des Hohlschaftes 3 am Bauteil 9 abstützen kann.

Mittels eines vorzugsweise pulverkraftbetriebenen Setzgerätes wird ein Nagel 10 mit einem Kopf 11 und einem Schaft 12 durch den Hohlschaft 3 hindurch in das Bauteil 9 eingetrieben. Am Ende des Eintreibvorganges läuft ein Nagelkopf 11 zumindest an dem Widerlager 5 auf, wodurch das Befestigungselement 1 und damit auch das Isolationsmaterial 8 am Bauteil 9 festgelegt wird.

In Fig. 2 ist das Ende des Eintreibvorganges für den Fall gezeigt, in dem eine mittlere Überenergie von dem Träger 4 aufgenommen wird. Das ist der Fall, wenn das Bauteil 8 dem Nagel 10 an der Befestigungsstelle einen durchschnittlichen Eintreibwiderstand entgegensetzt. Die Aufnahme 6 wird dann im fußnahen Bereich nicht vollständig durch das Trägermaterial ausgefüllt. Der Nagelkopf 11 bleibt auch in diesem Falle mit dem Widerlager 5 des nun verformten Trägers 4 in Kontakt, so daß das Isolationsmaterial 8 vom Befestigungselement 1 definiert am Bauteil 9 festgelegt ist.

In den Figuren 1 und 2 bildet der Träger 4 einen Außen-und die Aufnahme 6 einen Innenkonus desselben Konuswinkels. Der Innenkonus der Aufnahme 6 wird bis zu einer den Nagel führenden Bohrung fortgeführt.

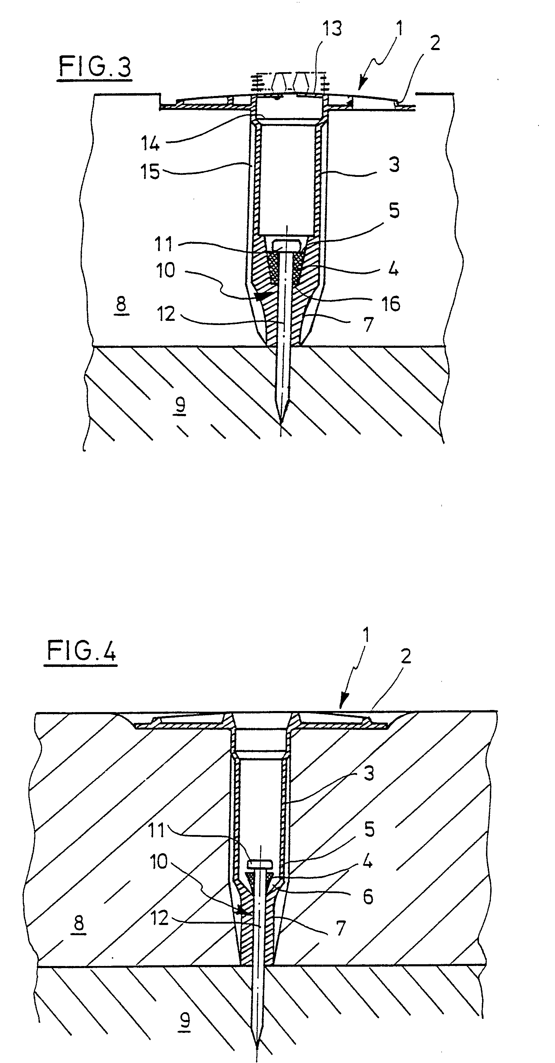

Soweit in den Fig. 3 und 4 die Bezugsziffern mit denjenigen der Fig. 1 und 2 übereinstimmen, besteht Merkmalsübereinstimmung und wird auf obige Beschreibung verwiesen. Nachfolgend wird nur auf die Unterschiede eingegangen.

Gemäß Fig. 3 hat das Befestigungselement 1 an seinem Kopf 2 einen Staubschutz 13, der nach Herstellen der Befestigung das Eindringen von Partikeln verhindert. In Kopfnähe hat der Hohlschaft 3 innen einen Absatz 14 zum Abstützen eines Eintreibinstrumentes. Außen ist der Hohlschaft 3 mit Längsrippen 15 versehen, die das Befestigungselement 1 stabilisieren.

Die konische Aufnahme 6 im Boden des Hohlschaftes 3 hat einen Flachboden 16, welcher den Träger 4 abstützt. Hierdurch wird insbesondere eine relativ lange Führungsbohrung des Nagels 10 im Fußende realisiert.

Der Träger füllt die Aufnahme vollständig aus und hat somit die maximale Überenergie absorbiert.

Die Fig. 4 zeigt eine dritte Ausführungsform des Befestigungselementes 1, in der sowohl der Träger 5 als auch die Aufnahme 6 eine Konusform aufweisen, jedoch mit verschiedenen Konuswinkeln. Gezeigt ist das Befestigungselement 1 beim Einschlagen des Nagels und vor einer Verformung des Trägers 5. Diese Ausführungsform ist besonders kompakt, da die Aufnahme zugleich den Boden des Hohlschaftes 3 bildet.

## Patentansprüche

1. Befestigungselement zum Befestigen von Isolationsmaterialien (8) an Bauteilen (9) mit einem großflächigen Kopf (2) und einem von diesem abragenden Hohlschaft (3) worin an einem deformierbaren Träger (4) ein Widerlager (5) für einen Nagel (10) angeordnet ist, dadurch gekennzeichnet, daß der Träger (4) unter mantelseitiger Anlage in eine Aufnahme (6) des Hohlschafts (3) preßbar ist, und sich Aufnahme und/oder Träger in Eintreibrichtung des Nagels (10) verjüngen.

2. Befestigungselement nach Anspruch 1, dadurch gekennzeichnet, daß der deformierbare Träger (4) einen Konus hat.

3. Befestigungselement nach Anspruch 1 oder Anspruch 2, dadurch gekennzeichnet, daß die Aufnahme (6) im Hohlschaft (3) einen Innenkonus aufweist.

4. Befestigungselement nach Anspruch 2 und Anspruch 3, dadurch gekennzeichnet, daß Träger (4) und Aufnahme (6) verschiedene Konuswinkel haben.

5. Befestigungselement nach Anspruch 4, dadurch gekennzeichnet, daß der Träger (4) einen spitzeren Konuswinkel als die Aufnahme (6) aufweist.

6. Befestigungselement nach einem der Ansprüche 1 bis 5, dadurch gekennzeichnet, daß der deformierbare Träger (4) und der Hohlschaft (3) mehrstückig ausgebildet sind.

7. Befestigungselement nach einem der Ansprüche 1 bis 5, dadurch gekennzeichnet, daß der deformierbare Träger (4) und der Hohlschaft (3) einstückig durch zerstörbare Brücken miteinander verbunden sind.

## Claims

1. A fastening element for fastening an insulation material (8) to structural components (9), comprising a head (2) having a large surface area and a hollow shaft (3) projecting therefrom, in which an abutment (5) for a nail (10) is provided on a deformable carrier (4), characterized in that the carrier (4) is allowed to be pressed into a recess (6) of the hollow shaft (3) under peripheral engagement thereof and that the recess and/or the carrier taper towards the direction of driving the nail (10) home.

2. Fastening element of claim 1, characterized in that the deformable carrier (4) includes a cone.

3. Fastening element of claim 1 or 2, characterized in that the recess (6) in the hollow shaft (3) includes an inner cone.

4. Fastening element of claim 2 and 3, characterized in that the carrier (4) and the recess (5) include different conical angles.

5. Fastening element of claim 4, characterized in that the carrier (4) has a conical angle which is more acute than that of the recess (6).

6. Fastening element according to one of claims 1 to 5, characterized in that the deformable carrier (4) and the hollow shaft (3) comprise a number of pieces.

7. Fastening element according to one of claims 1 to 5, characterized in that the deformable carrier (4) and the hollow shaft (3) are integrally connected together through bridges which can be broken up.

## Revendications

1. Element de fixation pour fixer des matériaux d'isolation (8) sur des éléments de construction (9) avec une tête (2) de grande surface et une tige creuse (3) descendant de celle-ci, à l'intérieur de laquelle un contre-appui (5) destiné à un clou (10) est disposé sur un support (4) déformable, caractérisé en ce que le support (4) peut être enfoncé dans un logement (6) de la tige creuse (3), avec appui du côté enveloppe et le logement et/ou le support vont en s'effilant dans la direction d'enfoncement du clou (10).

2. Element de fixation selon la revendication 1, caractérisé en ce que le support déformable (4) comporte un cône.

3. Element de fixation selon la revendication 1 ou 2, caractérisé en ce que le logement (6) présente un cône intérieur dans la tige creuse (3).

4. Element de fixation selon les revendications 2 et 3, caractérisé en ce que le support (4) et le logement (6) ont un angle de conicité différent.

5. Element de fixation selon la revendication 4, caractérisé en ce que le support (4) présente un angle conicité plus pointu que le logement (6).

6. Element de fixation selon l'une des revendications 1 à 5, caractérisé en ce que le support déformable (4) et la tige creuse (3) sont réalisés en plusieurs pièces.

7. Element de fixation selon l'une des revendications 1 à 5, caractérisé en ce que le support déformable (4) et la tige creuse (3) sont reliés d'un seul tenant par des ponts destructibles.
